# EUROPEAN PATENT APPLICATION

(11) **EP 1 746 492 A1**
(43) Date of publication of application: **24.01.2007**
(21) Application number: 06250633.2
(22) Date of filing: 06.02.2006
(51) Int. Cl.: G06F 3/06

(54) **Disk array apparatus and method for controlling the same**

(30) Priority: 08.07.2005 JP 2005199811
(71) Applicant: Hitachi, Ltd., Tokyo (JP)
(72) Inventor: Sato, Hajime, c/o Hitachi, Ltd. I.P. Group, Tokyo 100-8220 (JP); Matui, Yuko, c/o Hitachi, Ltd. I.P. Group, Tokyo 100-8220 (JP)
(74) Representative: Hodsdon, Stephen James

(57) **Abstract**

Proposed are: a disk array apparatus that can effectively and efficiently utilize its storage resources, and a method for controlling such a disk array apparatus.

A disk array apparatus and a method for controlling the disk array apparatus with a function of: retaining difference data that represent a difference between the content of a first logical volume at a designated time and the content of the current first logical volume, as well as difference management information that is management information for the difference data; and restoring the first logical volume to the state it was in at the designated time based on the retained difference data and difference management information. In the disk array apparatus and its control method, a second logical volume for storing the difference management information is set, in accordance with external operation, in a storage area provided by a specified storage device. When suspending the operation of the disk array apparatus, the difference management information retained in a specified memory is saved on the second logical volume; and when activating the disk array apparatus, the difference management information is read from the second logical volume and stored in the memory.

## Description

This application relates to and claims priority from Japanese Patent Application No. 2005-199811, filed on July 8, 2005, the entire disclosure of which is incorporated herein by reference.

The present invention relates to a disk array apparatus and a method for controlling the disk array apparatus, and is preferably applied to a disk array apparatus equipped with a snapshot function.

Conventionally, e.g. as described in Japanese Patent Laid-Open (Kokai) Publication No. 2003-242011, a disk array apparatus has a so-called "snapshot function" of retaining an image of a designated logical volume (hereinafter referred to as the "primary volume") upon receiving a snapshot creation instruction. The snapshot function is used to restore the primary volume to the state it was in at a designated time, for example, when data is lost by human error or when the state of the file system at a particular time needs to be restored.

The image of the primary volume retained by the snapshot function (sometimes referred to as "virtual volume") is not the data of the entire primary volume at the time of receipt of the snapshot creation instruction, but is composed of the data of the current primary volume and difference data retained on a dedicated logical volume called the "pool volume." This difference data is the difference between the primary volume at the time of receipt of the snapshot creation instruction and the current primary volume. Based on the difference data and the current primary volume, the primary volume is restored to the state it was in at the time of receipt of the snapshot creation instruction. Accordingly, the snapshot function has the advantageous effect of being able to restore the primary volume to the state it was in at the time of receipt of the snapshot creation instruction, by using a smaller storage capacity than would be the case if the content of the entire primary volume was stored.

In a conventional disk array apparatus, the microprogram including an OS (Operating System), the starting LBA (Logical Block Address) and ending LBA of each logical volume, the configuration information such as capacity and attributes, and information necessary to activate and control the entire disk array apparatus, including the set-up information for each external port (hereinafter collectively referred to as "system information") are mirrored and retained on two or more disk drives in the disk array apparatus. The area to which the system information is written is called the "system area" and is unchangeably reserved on each disk drive in advance.

The conventional disk array apparatus is also configured to save and retain, in the system area, management information for the different difference data used in the above-described snapshot function (hereinafter referred to as the "snapshot difference management information") upon scheduled suspension to stop the disk array apparatus according to a user's instruction.

Therefore, the conventional disk array apparatus has a problem in that it can hardly utilize its storage resources effectively and efficiently because the storage area for retaining the above-described snapshot difference management information is unchangeably reserved in the system area in advance even when it is not used, for example, when the disk array apparatus has not been equipped with the snapshot function at the user's request, or when the snapshot function remains unused.

The present invention has been made in consideration of the above conventional art problems. This invention aims to provide a disk array apparatus that can utilize its storage resources effectively and efficiently, and a method for controlling the disk array apparatus.

In order to preferably solve the above-described problem, one aspect of the present invention provides a disk array apparatus having a function of: retaining difference data that represent a difference between the content of a first logical volume at a designated time and the content of the current first logical volume, as well as difference management information that is management information for the difference data; and restoring the first logical volume to the state it was in at the designated time based on the retained difference data and difference management information. The disk array apparatus preferably includes: a memory for retaining the difference management information when the disk array apparatus is active; one or more storage devices; and a control unit for controlling data writing to and reading from the memory and the storage devices; wherein the control unit sets, in accordance with external operation, a second logical volume for storing the difference management information in a storage area provided by the storage device; and when suspending operation of the disk array apparatus, the control unit saves, on the second logical volume, the difference management information retained in the memory; and when activating the disk array apparatus, the control unit reads the difference management information from the second logical volume and stores it in the memory.

Moreover, another aspect of this invention provides a method for controlling a disk array apparatus having a function of: retaining difference data that represent a difference between the content of a first logical volume at a designated time and the content of the current first logical volume, as well as difference management information that is management information for the difference data; and restoring the first logical volume to the state it was in at the designated time based on the retained difference data and difference management information. The disk array apparatus controlling method preferably includes: a first step of setting, in accordance with external operation, a second logical volume for storing the difference management information in a storage area provided by a specified storage device; and a second step of saving, on the second logical volume, the difference management information retained in a specified memory upon suspension of the operation of the disk array apparatus, while reading the difference management information from the second logical volume and storing it in the memory upon activation of the disk array apparatus.

This invention can set a second logical volume for storing the difference management information when necessary. Accordingly, the storage resources can be used more effectively and efficiently than would be the case if the storage area for storing the difference management information were unchangeably reserved in advance.

### BRIEF DESCRIPTION OF THE DRAWINGS

Fig. 1 is a block diagram of the configuration of the disk array apparatus according to an embodiment of this invention.
Fig. 2 is a conceptual diagram for explanation of the logical volumes.
Fig. 3 is a conceptual diagram for explanation of the system for managing snapshot difference management information according to an embodiment of the invention.
Fig. 4 is a conceptual diagram for explanation of the system for managing snapshot difference management information according to the embodiment of the invention.
Fig. 5 is a conceptual diagram for explanation of a difference information table.
Fig. 6 is a flowchart illustrating a processing sequence to set a difference management volume.
Fig. 7 shows a set-up screen.
Fig. 8 shows a "select logical unit" dialogue.
Fig. 9 shows a confirmation message dialogue.
Fig. 10 shows the set-up screen after the difference management volume has been set.
Fig. 11 is a flowchart illustrating a CPU processing sequence after receiving a snapshot creation instruction.
Fig. 12 is a flowchart illustrating a CPU processing sequence for snapshot creation.
Fig. 13 is a flowchart illustrating a CPU processing sequence for saving the snapshot difference management information.
Fig. 14 is a flowchart illustrating a CPU processing sequence for reading the snapshot difference management information.
Fig. 15 is a conceptual diagram for explaining the CPU processing details when a failure in reading the snapshot difference management information has occurred.
Fig. 16 is a conceptual diagram illustrating a dedicated window that is set in a fixed area of the cache memory.
Fig. 17 is a diagram illustrating the relationship between the capacity of the cache memory and the snapshot difference management information data amount.
Fig. 18 is a flowchart illustrating a CPU processing sequence for setting a difference management volume in a disk array apparatus according to Embodiment 2 of this invention.
Fig. 19 shows how a list of candidate difference management volumes is displayed.

Preferred embodiments of this invention will be described in detail with reference to the attached drawings.

### (1) Embodiment 1

### (1-1) Configuration of Disk Array Apparatus 1 according to Embodiment 1

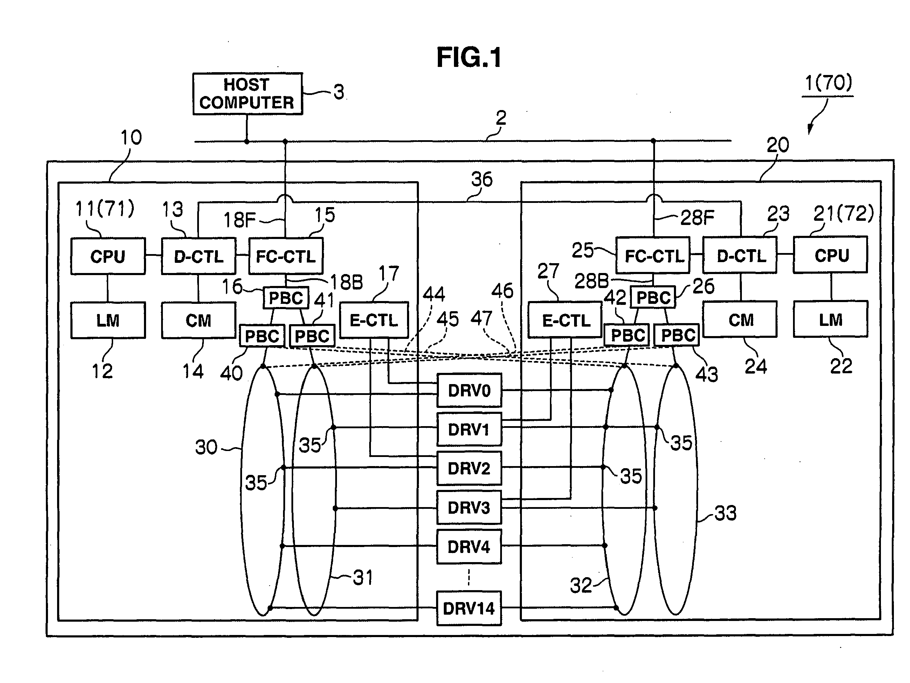

Fig. 1 shows the configuration of a disk array apparatus 1 according to Embodiment 1. The disk array apparatus 1 is connected to a host computer (or host system) 3 via a communication network 2.

The host computer 3 is, for example, a server, a personal computer, a workstation, or a mainframe that functions as the host system of the disk array apparatus 1. Examples of the communication network 2 include a LAN (Local Area Network), a SAN (Storage Area Network), the Internet, or private lines.

In the case of an open-type host computer, communication between the host computer 3 and the disk array apparatus 1 is conducted via the communication network 2 according to communication protocols such as TCP/IP (Transmission Control Protocol/Internet Protocol), FCP (Fibre Channel Protocol), and iSCSI (internet Small Computer System Interface). In the case of a mainframe-type host computer, communication between the host computer 3 and the disk array apparatus 1 is conducted via the communication network 2 according to communication protocols such as FICON (Fibre Connection ®), ESCON (Enterprise System Connection ®), ACONARC (Advanced Connection Architecture ®), and FIBARC (Fibre Connection Architecture ®).

The disk array apparatus 1 employs a dual controller configuration that includes double controllers 10 and 20. The main components of the controller 10 are: a CPU 11; a local memory (LM) 12; a data controller (D-CTL) 13; a cache memory (CM) 14; a Fibre Channel protocol controller (FC-CTL) 15; a PBC (Port Bypass Circuit) 16; an enclosure controller (E-CTL) 17; and FC-ALs (Fibre Channel Arbitrated Loops) 31 and 32.

The CPU 11 is the processor that controls data input/output processing (such as write-access and read-access) of a plurality of disk drives DRV0 to DRV14 in response to data input/output requests from the host computer 3. It controls, for example, the data controller 13, the Fibre Channel protocol controller 15, and the PBC 16 by running microprograms stored in the local memory 12.

Under the control of the CPU 11, the data controller 13 controls data transfer between the Fibre Channel protocol controller 15 and the cache memory 14. The cache memory 14 temporarily stores data sent and received between a front interface and a back interface via the Fibre Channel protocol controller 15.

The Fibre Channel protocol controller 15 is connected, via a front interface connection Fibre Channel 18F, to the host computer 3 and has the function of receiving block access requests according to Fibre Channel Protocol. Moreover, the Fibre Channel protocol controller 15 is connected, via a back interface connection Fibre Channel 18B, to disk drives DRV0 to DRV14 and has the function of sending data input/output requests to the disk drives DRV0 to DRV14 according to the protocols that specify commands and the like controlling the disk drives DRV0 to DRV14. The PBC 16 selects either one or both of the two FC-ALs 30 and 31 to be connected to the back interface connection Fibre Channel 18B and switches the connection as appropriate.

The FC-AL 30 is loop-connected, via a PBC 35 mounted on the FC-AL 31, to the even-number disk drives DRV0, DRV2, and so on to DRV14. The FC-AL 31 is loop-connected, via a PBC 35 mounted on the FC-AL 31, to the odd-number disk drives DRV1, DRV3, and so on to DRV13.

The PBC 35 is an electronic switch to automatically open or close the FC-AL 30 or 31 in order to minimize failures in the system operation and enable the addition or deletion of nodes. The PBC 35 has the function of bypassing and electrically excluding the Fibre Channel protocol controller 15 and the disk drives DRV0 to DRV14 from the FC-ALs 30 and 31. For example, the PBC 35 disconnects any one of the disk drives DRV0 to DRV14, in which a failure has occurred, from the FC-ALs 30 and 31, thereby enabling communication between the other disk drives DRV0 to DRV14 and the Fibre Channel protocol controller 15. The PBC 35 also enables the addition and removal of the disk drives DRV0 to DRV14 while maintaining the operation of the FC-ALs 30 and 31. If a new disk drive is installed, the PBC 35 incorporates the new disk drive into the FC-ALs 30 and 31 and enables communication between the new disk drive and the Fibre Channel protocol controller 15.

The enclosure controller (E-CTL) 17 controls the SES (SCSI Enclosure Services) drives. The SES drives have and can perform SES (SCSI Enclosure Services) and ESI (Enclosure Service I/F) functions specified in SCSI-3 (Small Computer System Interface 3) standards. In Embodiment 1, the SES drives can communicate not only with FC-ALs 30 to 33, but also with the enclosure controller 17. In this embodiment, the disk drives DRV0 to DRV3 are SES drives. However, all the disk drives DRV0 to DRV14 can be SES drives.

On the other hand, the controller 20 has a similar configuration to that of the controller 20. Main components of the controller 20 are: a CPU 21; a local memory (LM) 22; a data controller (D-CTL) 23; a cache memory (CM) 24; a Fibre Channel protocol controller (FC-CTL) 25; a PBC 26; an enclosure controller (E-CTL) 27; a front interface connection Fibre Channel 28F; a back interface connection Fibre Channel 28B; and FC-ALs 32 and 33.

The PBC 26 selects either one of or both of the two FC-ALs 32 and 33 to be connected to the back interface connection Fibre Channel 28B and switches the connection as appropriate. The FC-AL 32 is loop-connected, via the PBCs 35, to the even-number disk drives DRV0, DRV2, and so on to DRV14. The FC-AL 33 is loop-connected, via the PBCs 35, to the odd-number disk drives DRV1, DRV3, and so on to DRV13.

The data controllers 13 and 23 are mutually connected via a bus 36. One data controller 13 (or 23) can transfer commands or data to the other data controller 23 (or 13) via the bus 36. For example, if both the controllers 10 and 20 share their work load and access the same logical volume, it is possible to transfer write data or read data between the controllers 10 and 20.

The controllers 10 and 20 can control the disk drives DRV0 to DRV14 according to RAID levels (for example, level 0, 1, or 5) defined with regard to the RAID system. The RAID system manages a plurality of disk drives DRV0 to DRV14 as one group (hereinafter referred to as the "RAID group"). In the RAID group, logical volumes that are units of access from the host computer 3 are formed. Each logical volume is given an identifier called an LUN (Logical Unit Number).

PBCs 40 and 41 are installed respectively between the PBC 16 and the FC-ALs 30 and 31. If a failure occurs in the FC-AL 30, the PBC 40 connects the back interface connection Fibre Channel 18B, via a Fibre Channel 44 (shown with a dotted line), to the FC-AL 32. If a failure occurs in the FC-AL 31, the PBC 41 connects the back interface connection Fibre Channel 18B, via a Fibre Channel 45 (shown with a dotted line), to the FC-AL 33.

Likewise, PBCs 42 and 43 are installed respectively between the PBC 26 and the FC-ALs 32 and 33. If a failure occurs in the FC-AL 32, the PBC 42 connects the back interface connection Fibre Channel 28B, via a Fibre Channel 46 (shown with a dotted line), to the FC-AL 30. If a failure occurs in the FC-AL 33, the PBC 43 connects the back interface connection Fibre Channel 28B, via a Fibre Channel 47 (shown with a dotted line), to the FC-AL 31.

Assuming that all the PBCs 40 to 43 installed on the respective controllers 10 and 20 are connected to the Fibre Channels 44 to 47 and the back interface connection Fibre Channels 18B and 28B are thereby connected respectively to the FC-ALs 30 to 33 of the other controller 10 or 20, this state is the same as that shown, for example, in Fig. 1 of Japanese Patent Laid-Open (Kokai) Publication No. 2000-187561 where a Fibre Channel group that connects both controllers is connected to a plurality of disk drives.

The following description is given, assuming that the FC-AL 30 is an operating FC-AL for the controller 10, the FC-AL 31 is a standby FC-AL for the controller 10, the FC-AL 32 is a standby FC-AL for the controller 20, and the FC-AL 33 is an operating FC-AL for the controller 20.

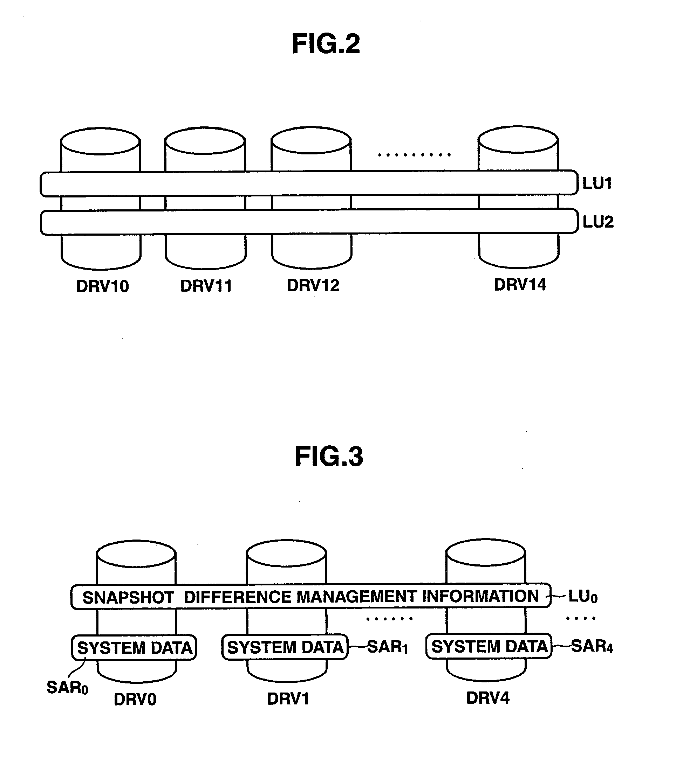

Fig. 2 shows logical volumes formed with a plurality of disk drives DRV0 to DRV14. For ease of explanation, two logical volumes LU1 and LU2 are shown in Fig. 2. The OS (Operating System) installed in the host computer 3 accesses the disk array apparatus 10 by designating the logical volume name. Assuming that there is only one physical disk that constitutes each logical volume LU1 or LU2, if that physical disk fails, the logical volume LU1 or LU2 becomes unavailable. In order to prevent this situation, the RAID system is configured in such a way that the respective logical volumes LU1 and LU2 are formed on different plural disk drives DRV0 to DRV14. Moreover, the operating FC-AL 30 of the controller 10 is connected to the even-number disk drives DRV0, DRV2, and so on to DRV14, while the operating FC-AL 33 of the controller 20 is connected to the odd-number disk drives DRV1, DRV3, and so on to DRV13. Therefore, a configuration may be employed wherein access to each logical volume LU1 or LU2 is not always conducted by either one of the controllers 10 and 20, but sometimes both the controllers 10 and 20 cooperate to access the logical volumes LU1 and LU2 under cooperative control.

When the host computer 3 write-accesses the logical volume LU1 or LU2 of the disk array apparatus 1, write data outputted with this write access from the host computer 3 and stored in the cache memory 14 in the controller 10 is also stored in the cache memory 14 in the other controller 20 via the bus 36. By having duplicate data in this manner, it is possible to implement fail-over by switching to the other controller 20 even if a failure occurs in the controller 10. When the write data has been stored in the cache memories 14 and 24, the disk array apparatus 1 gives notice of write-access completion to the host computer 3. Then, the controller 10 write-accesses the disk drives DRV0, DRV2, and so on to DRV14 via the FC-AL 30. Since the write-accessed logical volume LU1 or LU2 includes not only the even-number disk drives DRV0, DRV2, and so on to DRV14, but also the odd-number disk drives DRV1, DRV3, and so on to DRV13, the controller 20 write-accesses the odd-number disk drives DRV1, DRV3, and so on to DRV13 via the FC-AL 33.

On the other hand, when the host computer 3 read-accesses the logical volume LU1 or LU2 of the disk array apparatus 1, the controller 10 checks the cache memory 14. If the cache memory 14 has the target data for the read-access, the controller 10 reads the data and sends it to the host computer 3. If the cache memory 14 has no relevant data, the controller 10 read-accesses the disk drives DRV0, DRV2, and so on to DRV14 via the FC-AL 30. Since the read-accessed logical volume LU1 or LU2 includes not only the even-number disk drives DRV0, DRV2, and so on to DRV14, but also the odd-number disk drives DRV1, DRV3, and so on to DRV13, the controller 20 read-accesses the odd-number disk drives DRV1, DRV3, and so on to DRV13 via the FC-AL 33. The data read by the respective controllers 10 and 20 is dually written to the cache memories 14 and 24.

As both the controllers 10 and 20 under cooperative control cooperate to make access to one logical volume, it is possible to equalize the processing load of the respective controllers 10 and 20. This embodiment describes the case where the processing load of the controllers 10 and 20 is equalized by dividing the disk drives into two groups, that is, the even-number disk drives DRV0, DRV2, and so on to DRV14 and the odd-number disk drives DRV1, DRV3, and so on to DRV13. However, the processing load of the controllers 10 and 20 may be equalized by dividing the disk drives into any two groups, for example, the disk drives DRV0 to DRV7 and the disk drives DRV8 to DRV14, so that the number of disk drives that each controller 10 or 20 takes charge of is approximately the same.

Moreover, in this embodiment, all the disk drives DRV0 to DRV14 are connected to either controller 10 or 20 merely by controlling the two PBCs 16 and 26 and connecting the back interface connection Fibre Channels 18B and 28B to the operating FC-ALs 30 and 33. Accordingly, it is unnecessary to individually control the PBCs 35 mounted respectively on the FC-ALs 30 to 33, and their control is easy. Furthermore, the CPUs 11 and 21 do not distinguish the operating FC-ALs from standby FC-ALs within their controllers and recognize them as the same device, thereby enabling easy control.

### (1-2) System for Managing Snapshot Difference Management Information

A system for managing snapshot difference management information in the disk array apparatus 1 is described below.

In the disk array apparatus 1, as shown in Fig. 3, system areas SAR0 to SAR4 are fixedly assigned to the first five disk drives DRV0 to DRV4 connected to the FC-ALs 30 to 33. One characteristic of the disk array apparatus 1 is that the respective system areas SAR0 to SAR4 of the five disk drives DRV0 to DRV4 retain (i.e., quintuplicate) system information, including microprograms, that is commonly used by all users, while they retain, on a dedicated logical volume previously set by a user (hereinafter referred to as the "difference management volume"), part of the aforementioned snapshot difference management information obtained as a result of execution of the optional snapshot function.

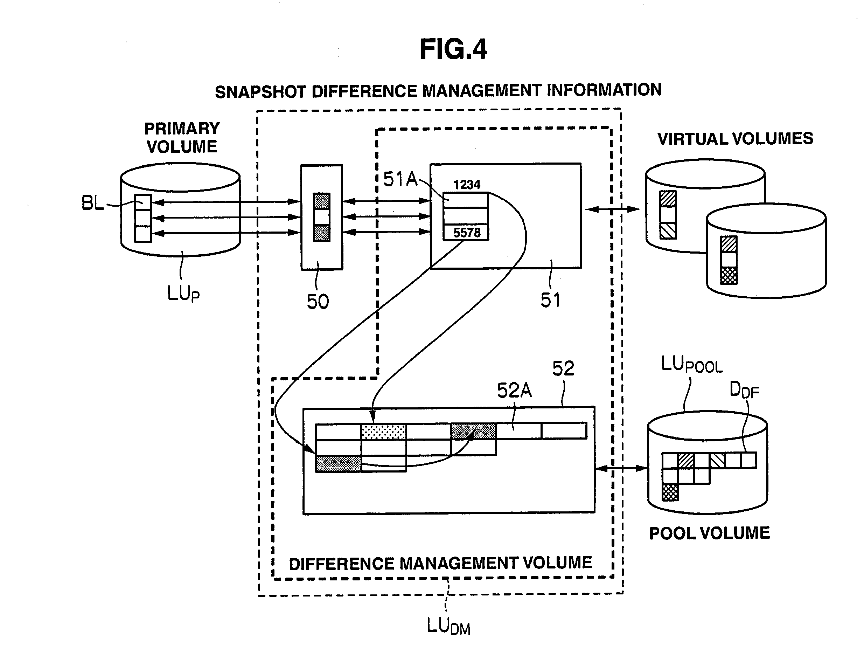

Fig. 4 is a conceptual diagram illustrating the system for managing the snapshot difference management information in the disk array apparatus 1. In the case of the disk array apparatus 1, the snapshot difference management information includes: a difference bit map 50, a primary volume address table 51, and a difference information table 52.

The difference bit map 50 is the bit map for managing, by 64-Kbyte block area BL units (variable within a certain range, for example, from 1 Kbyte to 512 Kbytes), whether or not there has been any change in the content of a primary volume LUₚ , the target logical volume LU for which a snapshot is created. The difference bit map 50 has a plurality of bits that are associated one-to-one with each block area of the primary volume LUp. This difference bit map 50 is reset (all the bits turned to "0") when it receives a snapshot creation instruction. Subsequently, when the content of any block area BL in the primary volume LUp is next updated (that is, when new data is written to that block area BL or the data written on that block area is overwritten), the bit associated with that block area BL is changed from "0" to "1."

The primary volume address table 51 is the table that associates the respective block areas BL of the primary volume LUp with their corresponding management areas 52A in the difference information table 52. The primary volume address table 51 is provided with a plurality of address areas 51 A that are associated with the respective block areas BL of the primary volume LUₚ. When the content of the relevant block area BL of the primary volume LUp is updated and the corresponding difference data D_{DF} is stored in a pool volume LU_{POOL}, the address of the management area 52A created in the difference information table 52 in association with the difference data D_{DF} is stored in the address areas 51A as described later.

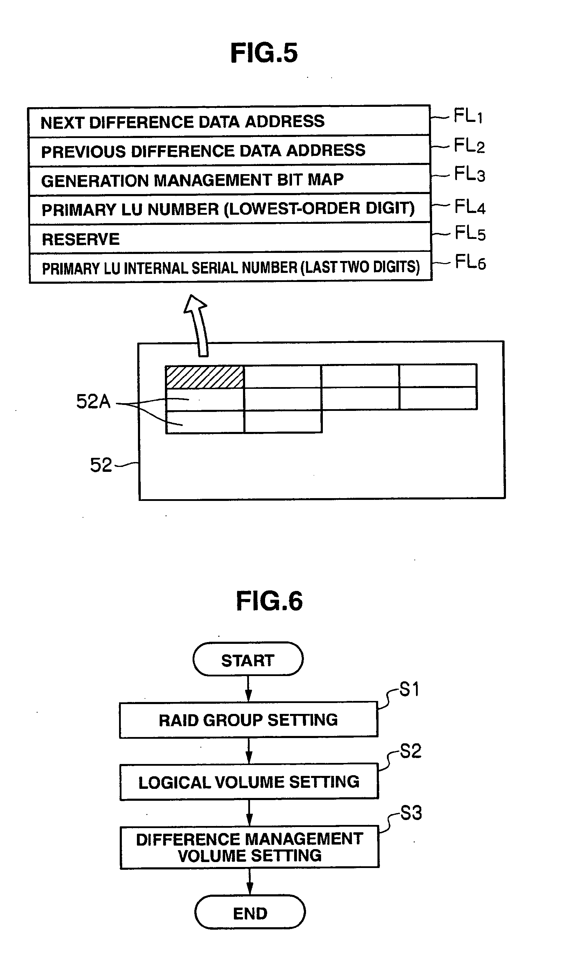

The difference information table 52 has a plurality of management areas 52A that are associated one-to-one with the respective difference data D_{DF} stored in the pool volume LU_{POOL}. As shown in Fig. 5 for example, each management area 52A includes: a 4-byte next difference management information address field FL₁; a 4-byte previous difference management information address field FL₂; a 4-byte generation management bit map field FL₃; a 1-byte primary volume LUN field FL₄; a 1-byte reserve field FL₅; and a 2-byte primary volume internal serial number field FL₆.

Among these fields, the generation management bit map field FL₃ is used to store a generation management bit map to enable the creation of virtual volumes (snapshots) for a plurality of generations. In this generation management bit map field FL₃, a virtual volume of the generation to which the relevant difference data D_{DF} belongs is stored. The next difference management information address field FL₁ is used to store the address, in the difference information table 52, of the management area 52A that is associated with the relevant difference data D_{DF} of the next-generation virtual volume. Moreover, the previous management information address field FL₂ is used to store the address, in the difference information table 52, of the management area 52A that is associated with the relevant difference data D_{DF} of the previous-generation virtual volume. By following the address stored in this previous difference management information address field FL₂, it is possible to access the relevant difference data D_{DF} of the older-generation virtual volumes, as well as their management information.

The primary volume LUN field FL₄ is used to store the lowest 1 byte of the LUN of the relevant primary volume LUp. This is used as a check code. The primary volume internal serial number field FL₆ is used to store the serial number of the relevant block area BL in the primary volume LUp. This is also used as a check code. The reserve field FL₅ is provided for future expansion and is usually used to store dummy data.

Among the above-described snapshot difference management information, the difference bit map 50 is stored and retained as part of the system information in the system areas SAR₀ to SAR₄ described above regarding Fig. 3, when suspending the operation of the disk array apparatus 1. During suspension of operation of the disk array apparatus 1, the difference bit map 50, the primary volume address table 51A, and the difference information table 52 are stored in a difference management volume LU_{DM}. During start-up of the disk array apparatus 1, the difference bit map 50, the primary volume address table 51A, and the difference information table 52 are respectively read from the system areas SAR₀ to SAR₄ and the difference management volume LU_{DM} and are loaded into the cache memories 14 and 24, and then updated as necessary as described later.

The difference bit map 50, the primary volume address table 51, and the difference information table 52 are prepared for each of the controllers 10 and 20. Since the controllers 10 and 20 create the difference information tables 52 and other tables and maps in synchronization with each other while communicating with each other, the resulting tables and maps are the same for each controller. As the difference bit map 50, the primary volume address table 51, and the difference information table 52 are duplicated in the disk array apparatus 1, even if some data is faulty, the other data can be used to deal with situations as necessary.

Fig. 6 is a flowchart illustrating a processing sequence to set the difference management volume LU_{DM} in the disk array apparatus 1. In order to set the difference management volume LU_{DM} in the disk array apparatus 1, a RAID group consisting of a plurality of disk drives DRV0 to DRV14 is first set in the same manner as for the creation of a normal logical volume LU (S1). Specifically speaking, the RAID group is set by operating the host computer 3, on which special software is installed (Fig. 1), to make its display unit display a specified set-up screen, and using this set-up screen to set the disk drives DRV0 to DRV14, which constitute the RAID group, the capacity of the RAID group, the RAID configuration (for example, 4D + 1 P), and the RAID level (1, 1+0, or 2 to 6).

Subsequently, the user creates a logical volume(s) LU in the RAID group that has been set up in the above-described manner (S2). Specifically, by using the above-mentioned set-up screen, the LUNs and capacities of the logical volumes LU to be created are set respectively.

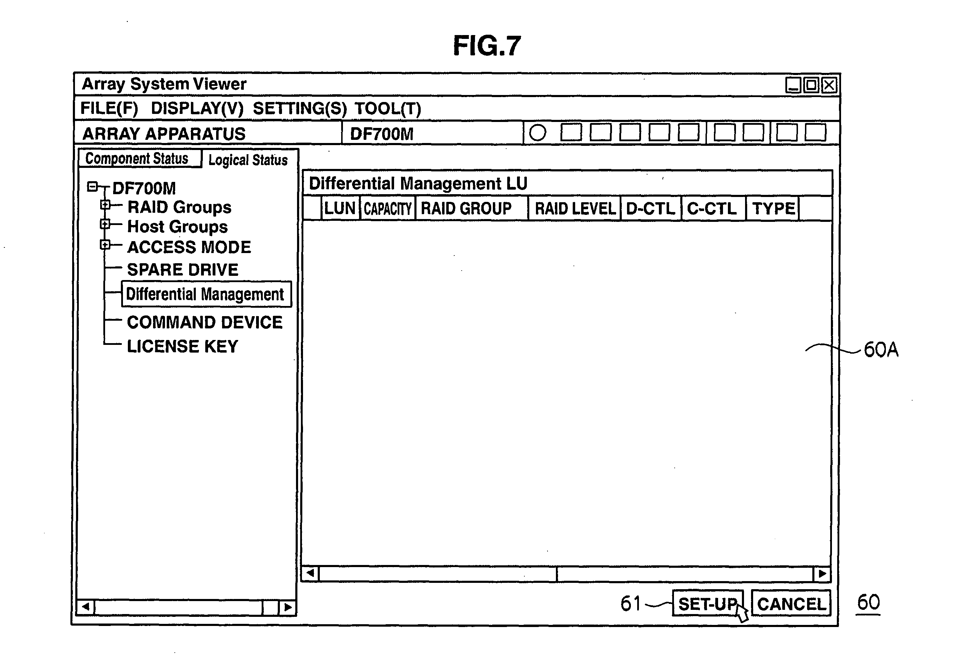

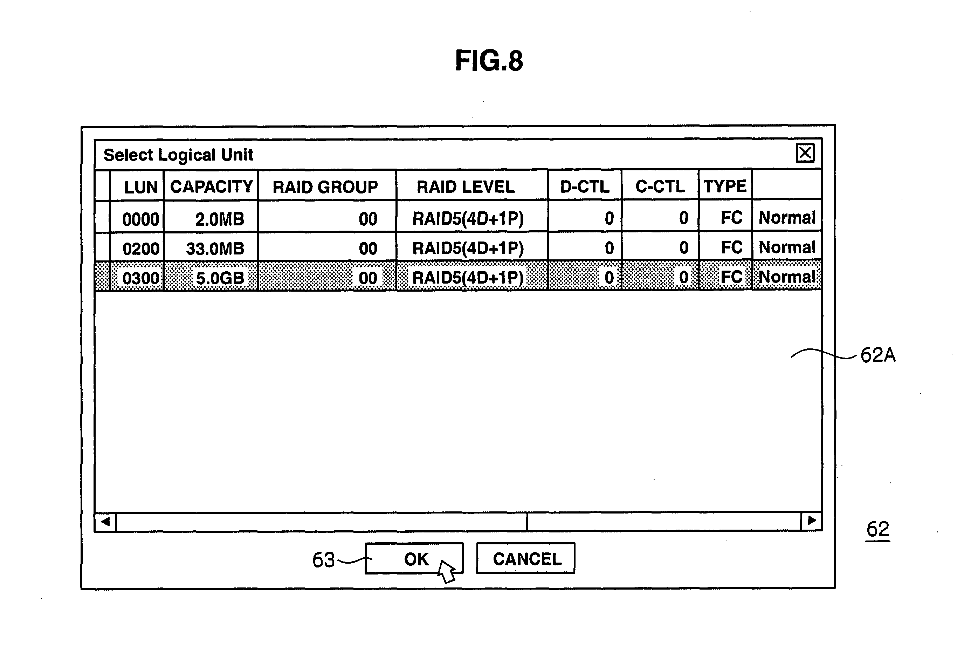

The user then sets the difference management volume LU_{DM} by selecting a desired logical volume LU from among the thus created one or more logical volumes LU (S3). Specifically, the difference management volume LU_{DM} is set by operating the host computer 3 to make its display unit display a set-up screen 60 as shown in Fig. 7, and clicking the set-up button 61 displayed on the right bottom of the set-up screen 60. As a result, the display unit of the host computer 3 displays a 'select logical unit' dialogue box 62 as shown in Fig. 8.

This select logical unit dialogue box 62 is a dialogue box for selecting the logical volume LU to be set as the difference management volume LU_{DM}. A list of the various information for each candidate logical volume LU from among all the logical volumes formed in the disk array apparatus 1, such as the LUN and capacity of the logical volume LU and the identification number of the RAID group to which that logical volume LU belongs, is displayed in a logical volume information display column 62A.

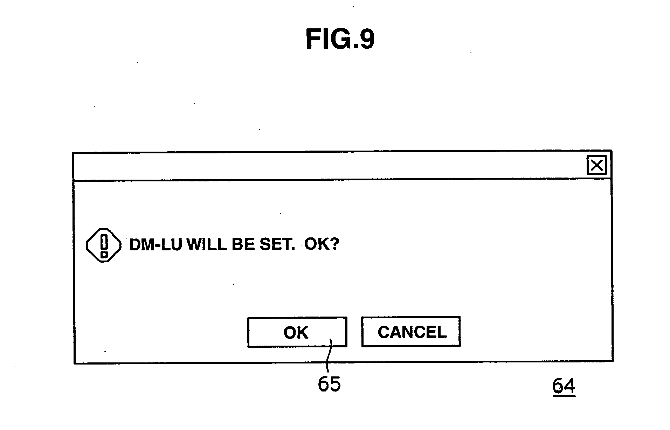

Accordingly, the user visually checks the information displayed on the logical volume information display column 62A of the select logical unit dialogue box 62, selects a desired logical volume LU that satisfies any necessary conditions (a capacity of 5-Gbyte or more in this embodiment), and then clicks the OK button 63. As a result, the display unit of the host computer 3 displays a confirmation message dialogue box 64 as shown in Fig. 9. If there is no problem, the user clicks an OK button 65 of the confirmation message dialogue box 64.

Consequently, the thus selected logical volume LU is set as the difference management volume LU_{DM}. Various information for the selected logical volume LU (difference management volume LU_{DM}), such as its LUN, capacity, and identification number of the RAID group to which the logical volume LU belongs, is displayed in a difference management volume display column 60A of the set-up screen 60.

The difference management volume LU_{DM} that has been set up in the above-described manner is treated in a manner similar to other normal logical volumes LU in the disk array apparatus 1. However, the logical volume LU set as the difference management volume LU_{DM} is shielded so that it cannot be recognized by the host computer 3.

In the disk array apparatus 1 according to this embodiment, up to two logical volumes LU can be selected and set as the difference management volumes LU_{DM} by using the 'select logical unit' dialogue box 62 (Fig. 8). When this happens, the second logical volume LU is used to mirror the first logical volume LU.

If no difference management volume LU_{DM} is set in the disk array apparatus 1, the snapshot function will not be executed. Judgment on whether or not the difference management volume LU_{DM} has been set is not made at the stage where an optional program for the snapshot function is purchased and installed and an unlocking key is entered from a management program. When the host computer 3 actually gives a snapshot creation instruction to the disk array apparatus 1, the CPUs 11 and 21 in the respective controllers 10 and 20 of the disk array apparatus 1 judge whether or not the difference management volume LU_{DM} has been set.

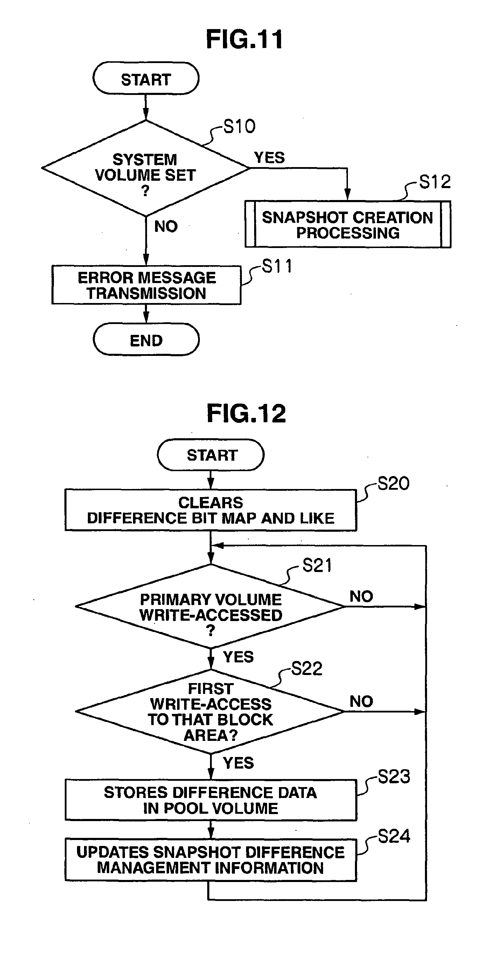

Fig. 11 is a flowchart illustrating a processing sequence of the CPUs 11 and 21 concerning the above-mentioned judgment. When receiving the snapshot creation instruction from the host computer 3, the CPUs 11 and 21 judge whether or not the difference management volume LU_{DM} has been set, based on the system information loaded into the cache memories 14 and 24 (S10).

If the difference management volume LU_{DM} has not been set, the CPUs 11 and 21 send an error message to the host computer 3 (S11). As a result, the display unit of the relevant host computer 3 displays a corresponding error message.

On the other hand, if the difference management volume LU_{DM} has been set, the CPUs 11 and 21 execute the snapshot creation processing according to the flowchart shown in Fig. 12 in parallel with processing of data writing/reading to/from the primary volume LUp (S12).

When the CPUs 11 and 21 start the snapshot creation processing, they first clear the difference bit map 50 (Fig. 4) and the primary volume address table 51 (Fig. 4) (S20), and then wait for a write-access to the primary volume LUp (S21).

Subsequently, when the host computer 3 write-accesses the primary volume LUp (S21: YES), the CPUs 11 and 21 first refer to the difference bit map 50 and judge whether the write-access to the block area BL of the primary volume LUp, to which write data should be written, is the first access since the last snapshot creation instruction (S22).

If the write-access is not the first access to the block area BL (S22: NO), the CPUs return to the standby state again to wait for a write-access to the primary volume LUp (S21).

On the other hand, if the write-access is the first access to the block area BL (S22: YES), the CPUs 11 and 21 read the data of the relevant block area BL immediately before the write-access to the primary volume LUp and write that data as the difference data D_{DM} (Fig. 4) at the corresponding address location in the pool volume LU_{POOL} (Fig. 4) (S23).

Then, the CPUs 11 and 21 execute processing to update the difference bit map 50, the primary volume address table 51, and the difference information table 52 which are loaded into the cache memories 14 and 24 (S24).

Specifically speaking, the CPUs 11 and 21 change the corresponding bit of the difference bit map 50 from "0" to "1." The CPUs 11 and 21 also secure the management area 52A (Fig. 4) for the difference data D_{DF} in the difference information table 52, and respectively store the necessary information in the generation management bit map field FL₃ (Fig. 5), the primary volume LUN field FL₄ (Fig. 5), and the primary volume internal serial number field FL₆ (Fig. 5) of the management area 52A. If a previous-generation virtual volume exists at that time, the address, in the difference information table 52, of the management area 52A associated with the previous-generation difference data D_{DF} is stored in the previous difference management information address field FL₂ (Fig. 5) of that management area 52A, and the address, in the difference information table 52, of the management area 52A secured in the above-described manner is stored in the next difference management information address field FL₁ (Fig. 5) of the management area 52A associated with the previous-generation difference data D_{DF}. Moreover, the CPUs 11 and 21 store the address of this management area 52A in the corresponding address area 51A of the primary volume address table 51.

The CPUs 11 and 21 then return to the standby state again to wait for a write-access to the primary volume LUp (S21). Subsequently, the CPUs 11 and 21 retain the image of the primary volume LUp (virtual volume) upon receipt of the snapshot creation instruction by repeating the same processing (from S21 to S24 and back to S21).

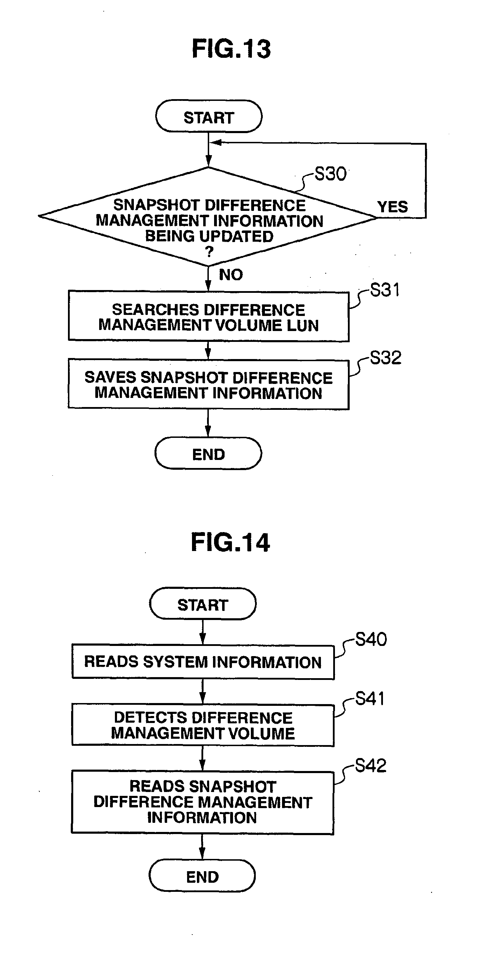

On the other hand, Fig. 13 is a flowchart illustrating a processing sequence for the CPUs 11 and 21 to save difference information upon scheduled suspension of the disk array apparatus 1.

Upon receipt of a command from the host computer 3 from a user to stop operation, the CPU 11 or 21 communicates with the CPU 21 or 11 of the other controller 10 or 20 and judges whether or not at least either its own CPU 11 or 21 or the other CPU 21 or 11 is in the process of updating the snapshot difference management information (S30).

If a positive judgment result is received (S30: YES), both the CPUs 11 and 21 wait for the termination of the processing to update the snapshot difference management information; and when they both have finished processing to update the snapshot difference management information (S30: NO), they acquire the LUN of the difference management volume LU_{DM} based on the system information retained in the cache memories 14 and 24 (S31). If another difference management volume LU_{DM} for mirroring purposes (the second difference management volume) is set, the CPUs 11 and 21 also acquire the LUN of that difference management volume LU_{DM} (S31).

Based on the thus acquired LUN of the difference management volume LU_{DM} and the system information, the CPUs 11 and 21 store (or save), on the difference management volume LU_{DM}, the data of the primary volume address table 51 and the difference information table 52 out of the snapshot difference management information retained in the cache memories 14 and 24 (S32). If the difference management volume LU_{DM} for mirroring purposes is set at that time, the primary volume address table 51 and the difference information table 52 are also saved on the mirror-side difference management volume LU_{DM} (S32).

Moreover, the CPUs 11 and 21 detect the disk drives DRV0 to DRV4 which have the system areas SAR₀ to SAR₄, based on the system information retained in the cache memories 14 and 24, and store (or save), in the system areas SAR₀ to SAR₄, the difference bit map 50, out of the snapshot difference management information loaded into the cache memories 14 and 24, together with the other system information loaded into the cache memories 14 and 24 (S32).

On the other hand, Fig. 14 is a flowchart illustrating a processing sequence for the CPUs 11 and 21 to read the snapshot difference management information upon start-up of the disk array apparatus 1.

Upon receipt of a command from the host computer 3 from a user to start the disk array apparatus 1, the CPUs 11 and 21 first read the system information from any of the five disk drives DRV0 to DRV4 equipped with the aforementioned system areas SAR₀ to SAR₄, and load the system information into the cache memories 14 and 24 (S40).

The CPUs 11 and 21 then detect the LUN of the difference management volume LU_{DM} based on the system information loaded into the cache memories 14 and 24 (S41). Subsequently, the CPUs 11 and 21 read snapshot difference management information (the primary volume address table 51 and the difference information table 52) from the logical volume LU, i.e., the difference management volume LU_{DM}, with the detected LUN, and load the snapshot difference management information into the cache memories 14 and 24 (S42).

If two difference management volumes LU_{DM} have been set, the CPUs 11 and 21 read the snapshot difference management information from the difference management volume LU_{DM} that was set first, of the two of them (hereinafter referred to as the "master-side difference management volume LU_{DM}"). However, if the CPUs 11 and 21 fail to read the snapshot difference management information, for example, because of broken data due to a write error when saving it, they control the disk drives DRV0 to DRV14 to switch the target from the master-side difference management volume LU_{DM} to the other difference management volume LU_{DM} that was set last (hereinafter referred to as the "mirror-side difference management volume LU_{DM}") and to read the snapshot difference management information from the mirror-side difference management volume LU_{DM}. At that moment, the CPUs 11 and 21 control the disk drives DRV0 to DRV14 to resume reading the snapshot difference management information from the mirror-side difference management volume LU_{DM} from the location unreadable from the master-side difference management volume LU_{DM}.

Moreover, if the CPUs 11 and 21 fail to read the snapshot difference management information from the mirror-side difference management volume LU_{DM}, they control the disk drives DRV0 to DRV14 to switch the target from the mirror-side difference management volume LU_{DM} to the master-side difference management volume LU_{DM} and to read the snapshot difference management information from the master-side difference management volume LU_{DM}. In this case as well, the CPUs 11 and 21 control the corresponding disk drives DRV0 to DRV14 to resume reading the difference information from the location unreadable from the mirror-side difference management volume LU_{DM}.

As described above regarding the disk array apparatus 1, a user can freely set the difference management volume LU_{DM} at their leisure, and the difference management volume LU_{DM} which has been thus set stores the snapshot difference management information excluding the difference bit map 50. Accordingly, when compared to a conventional disk array apparatus in which the storage capacity to store the snapshot difference management information is unchangeably reserved in the system areas SAR₀ to SAR₄ in advance regardless of whether or not the snapshot function has been purchased or used, the disk array apparatus 1 can effectively and efficiently use the storage capacity (or storage resources) of the disk drives DRV0 to DRV4.

Moreover, in the disk array apparatus 1, two such difference management volumes LU_{DM} can be set. When the two difference management volumes LU_{DM} are set, the snapshot difference management information retained in the cache memories 14 and 24 is saved on each difference management volume LU_{DM}. Therefore, even if any problem occurs in the snapshot difference management information stored in one difference management volume LU_{DM} for any reason, such as a write error upon saving, the situation can be dealt with sufficiently.

Incidentally, the disk array apparatus 1 is provided with a dedicated window, for accessing the storage areas in the cache memories 14 and 24 where the snapshot difference management information is stored after the snapshot difference management information is read from the difference management volume LU_{DM} and the system areas SAR0 to SAR4 and loaded into the cache memories 14 and 24.

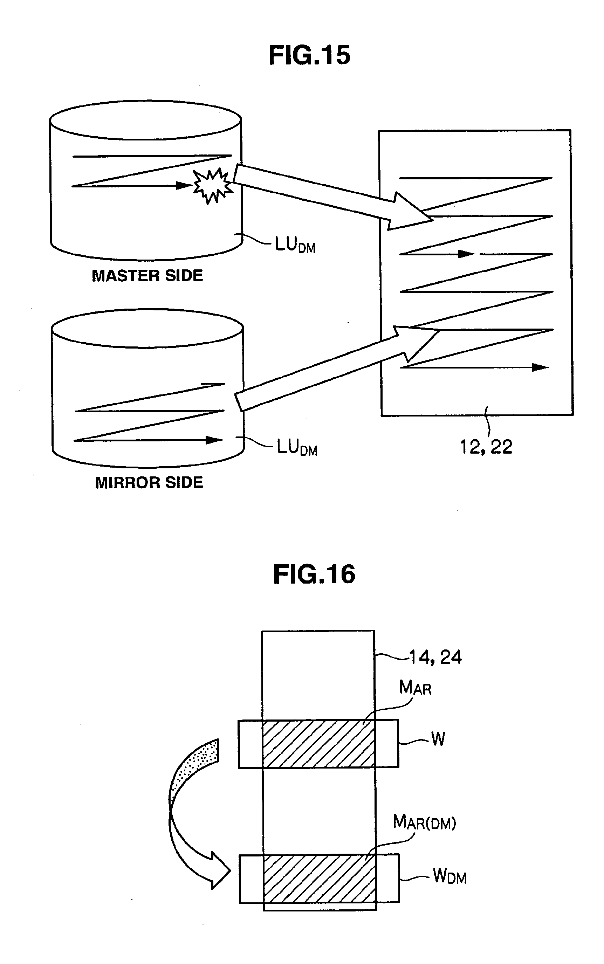

When accessing the cache memories 14 and 24, it is usually impossible to access their entire storage areas at once. Therefore, as shown in Fig. 16, window W is set to surround only area M_{AR} of the cache memories 14 and 24 from which the relevant data is to be read, and processing to allow access exclusively to the area M_{AR} is executed.

In order to set window W for a particular access in the above-described case, certain processing is required, for example, to delete the previous exclusive setting and then switch window W from the previous access position to a new access position. Accordingly, such processing may cause overhead, thereby hindering prompt memory access.

Therefore, in the disk array apparatus 1, a dedicated window W_{DM} is set in advance for the fixed area M_{AR(DM)} of the cache memories 14 and 24, which store the snapshot difference management information that is frequently accessed. So, even if window W is set in another area, the area M_{AR(DM)} that stores the snapshot difference management information can be exclusively accessed by using the dedicated window W_{DM}. As a result, overhead can be reduced when switching windows and a prompt access to the M_{AR(DM)} can be made.

The area M_{AR} where the dedicated window W_{DM} can be set is not limited to the area M_{AR(DM)} in the cache memories 14 and 24 where the snapshot difference management information is stored. A dedicated window W may be set in the same manner in the other fixed area(s) M_{AR} that is (or are) frequently accessed.

### (2) Embodiment 2

In Fig. 1, reference numeral 70 indicates a disk array apparatus according to Embodiment 2. This disk array apparatus 70 is configured in the same manner as the disk array apparatus 1 according to Embodiment 1, except that a different method is employed for setting the difference management volume LU_{DM}.

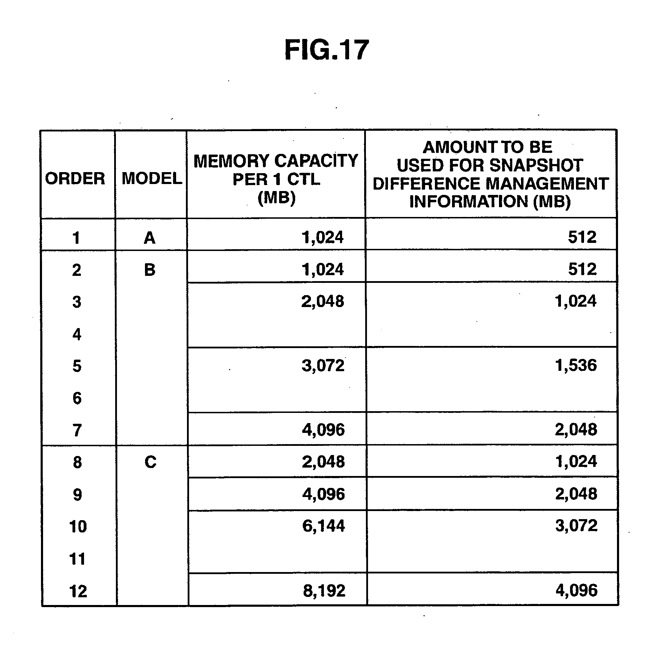

In the disk array apparatus 1 according to Embodiment 1, the capacity used to store the snapshot difference management information is predetermined in relation to the capacity of the cache memory 14 or 24 per controller 10 or 20 as shown in Fig. 17. As is clear from Fig. 17, when the capacity of the cache memory 14 or 24 per controller 10 or 20 is 1,024 to 8,192 Mbytes, the capacity that can be used to store the snapshot difference management information is 512 to 4,096 Mbytes.

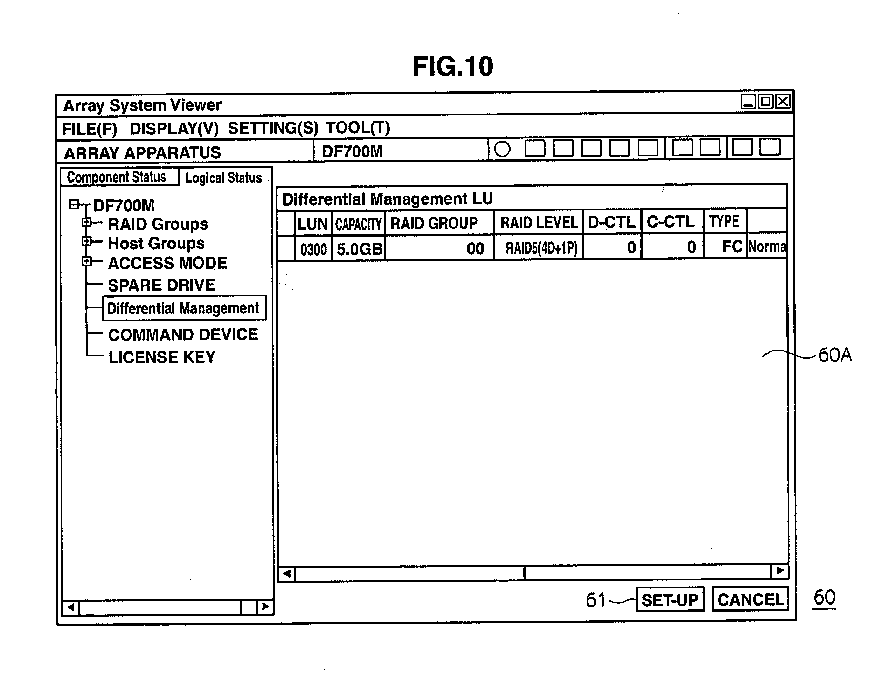

Accordingly, when the set-up screen 60 described above regarding Figs. 7 to 10 is used to select the logical volume LU to be set as the difference management volume LU_{DM}, in consideration of the fact that the maximum capacity to be used to store the snapshot difference management information on the cache memory 14 or 24 is 4,096 Mbytes, the condition for a logical volume LU being selected as the difference management volume LU_{DM} is having a minimum storage capacity of 5 Gbytes.

With the above-described configuration, when setting the difference management volume LU_{DM} the user can just select a logical volume LU having an unchangeable capacity of 5 Gbytes or more without worrying about the capacity of the cache memory 14 or 24 of each controller 10 or 20 in the disk array apparatus 1. This makes facilitating the operation to set the difference management volume LU_{DM}. However, because of the above-described configuration, even if the required capacity of the difference management volume LU_{DM} is only 512 MB, a logical volume LU of 5 Gbytes or more is always selected. Therefore, there is a problem in that the difference is wasted capacity.

The disk array apparatus 70 according to Embodiment 2 is characterized in that when setting the difference management volume LU_{DM}, the CPU 71 or 72 of each controller 10 or 20 examines the capacity of the cache memory 14 or 24 of each controller 10 or 20 of the disk array apparatus 70 and presents to the user a logical volume LU having the optimum capacity as a candidate difference management volume LU_{DM}, based on the results of the examination.

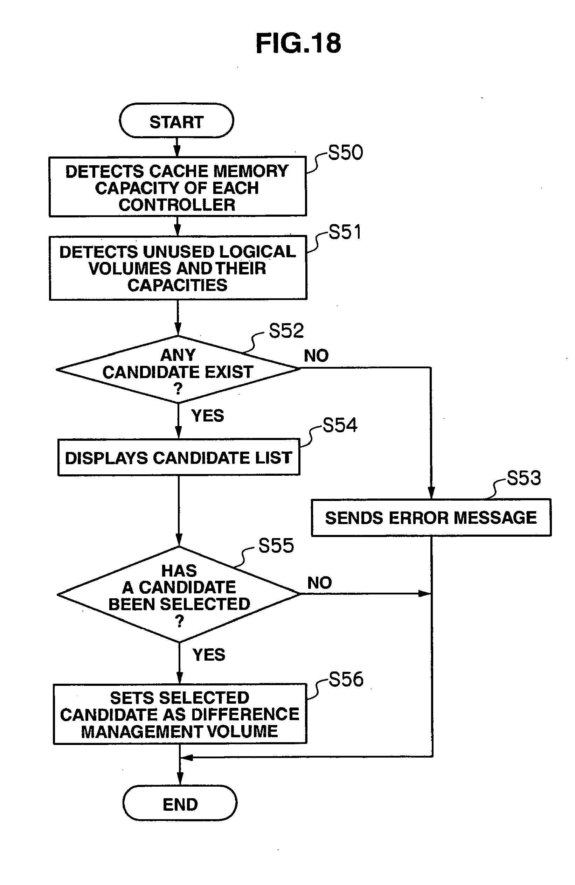

Fig. 18 is a flowchart illustrating a processing sequence for the CPUs 71 and 72 in the disk array apparatus 70 to set the difference management volume LU_{DM}.

When the user operates the host computer 3 and enters a specified command to set the difference management volume LU_{DM}, the CPUs 71 and 72 detect the capacity of the cache memory 14 or 24 in each controller 10 or 20 based on the system information read from the system areas SAR₀ to SAR₄ of the specified disk drives DRV0 to DRV4 and loaded into the cache memories 14 and 24 (S50). Moreover, the CPUs 71 and 72 detect the unused logical volumes LU and their capacities based on the system information (S51).

Based on the detection results, the CPUs 71 and 72 then judge whether or not there is any candidate difference management volume LU_{DM}, that is, any unused logical volume LU having a capacity equal to or less than a predetermined amount (about several to several hundred of Mbytes) plus the capacity of the cache memory 14 or 24 of each controller 10 or 20 (S52).

If the CPUs 71 and 72 determine as a result of the above judgment that there is no candidate difference management volume LU_{DM} (S52: NO), they send an error message to the host computer 3 and terminate the processing. Consequently, the corresponding error message is displayed on the display unit of the host computer 3.

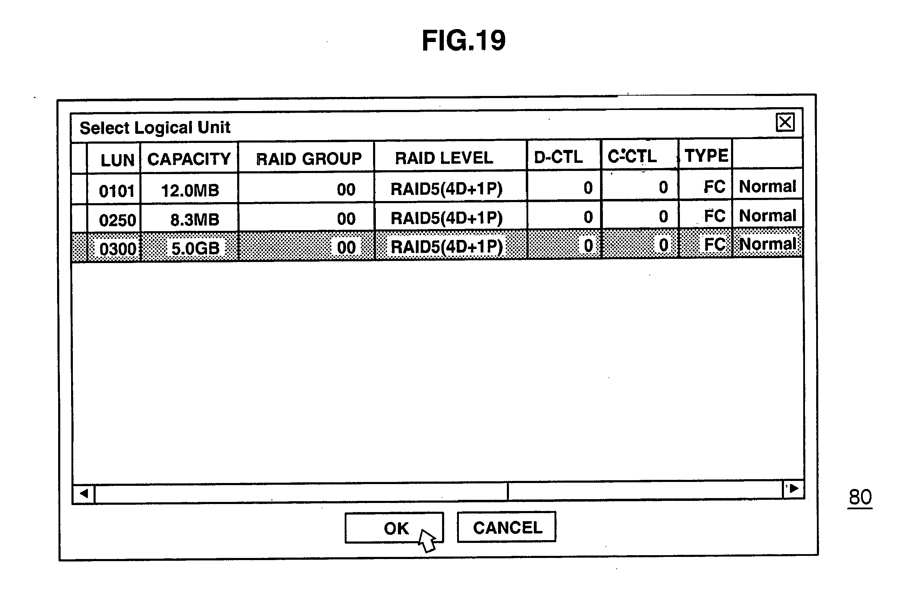

On the other hand, if the CPUs 71 and 72 determine as a result of the above judgment that candidate difference management volumes LU_{DM} exist, they send various information about all the relevant logical volumes LU to the host computer 3 and make the display unit of the host computer 3 display a 'select logical unit' dialogue box 80 as shown in Fig. 19.

In the 'select logical unit' dialogue box 80, a list of information about all the candidate difference management volumes LU_{DM}, including their LUNs and capacities, is displayed. Also in this 'select logical unit' dialogue box 80, from among all candidate difference management volumes LU_{DM}, the logical volume LU whose capacity is larger than and closest to the required capacity for the difference management volume LU_{DM} in relation to the capacity of the cache memory 14 or 24 of each controller 10 or 20 is highlighted.

The CPUs 71 and 72 wait for a logical volume LU to be selected from among all the logical volumes LU listed as the candidate difference management volumes LU_{DM} in the 'select logical unit' dialogue box 80 (S55). When a command is entered from the host computer 3 to select a logical volume LU from among the logical volumes LU listed in the 'select logical unit' dialogue box 80 (S55: YES), the CPUs 71 and 72 set the selected logical volume LU as the difference management volume LU_{DM} in response to the above command (S56). The CPUs 71 and 72 then terminate the processing.

On the other hand, if none of the logical volumes LU listed in the 'select logical unit' dialogue box 80 is selected (S55: NO), the CPUs 71 and 72 terminate the processing without setting the difference management volume LU_{DM} at that stage. Accordingly, in that case, the user will have to find a logical volume LU which can be the difference management volume LU_{DM} by himself/herself, by following the aforementioned procedures in Embodiment 1.

As described above, when setting the difference management volume LU_{DM}, the disk array apparatus 70 according to Embodiment 2 is designed to detect the capacity of the cache memory 14 or 24 of each controller 10 or 20 and to present, to the user, the logical volume LU with the optimum capacity as the candidate difference management volume LU_{DM}, based on the detection results. Therefore, it is possible to easily set the difference management volume LU_{DM} and to facilitate, for example, the operation to initialize the snapshot function.

In the above-described case, the unused logical volumes LU, whose capacities are equal to or less than the predetermined amount plus the capacity of the cache memory 14 or 24, are presented as candidate difference management volumes LU_{DM}. Accordingly, the logical volume LU with the optimum capacity in relation to the capacity of the cache memory 14 or 24 can be presented as the difference management volume LU_{DM}. As a result, it is possible to effectively prevent the problem of setting, as the difference management volume LU_{DM}, a logical volume with a wastefully large capacity when compared to the capacity of the cache memory 14 or 24.

### (3) Other Embodiments

Embodiments 1 and 2 describe cases where only one mirror-side difference management volume LU_{DM} is set (that is, two difference management volumes LU_{DM} are set). However, this invention is not limited to such a configuration, and two or more mirror-side difference management volumes LU_{DM} may be set (that is, three or more difference management volumes LU_{DM} may be set).

Moreover, Embodiment 2 describes a method for presenting the logical units LU as candidate difference management volumes LU_{DM} to the user by displaying the 'select logical unit dialogue box 80' shown in Fig. 19 on the display unit of the host computer 3. However, this invention is not limited to this method, and other various presentation methods may be applied.

## Claims

1. A disk array apparatus having a function of:
retaining difference data that represent a difference between the content of a first logical volume at a designated time and the content of the current first logical volume, as well as difference management information that is management information for the difference data; and
restoring the first logical volume to the state it was in at the designated time based on the retained difference data and difference management information;
the disk array apparatus comprising:
a memory for retaining the difference management information when the disk array apparatus is active;
one or more storage devices; and
a control unit for controlling data writing to and reading from the memory and the storage devices;
wherein the control unit sets, in accordance with external operation, a second logical volume for storing the difference management information in a storage area provided by the storage device; and when suspending operation of the disk array apparatus, the control unit saves, on the second logical volume, the difference management information retained in the memory; and when activating the disk array apparatus, the control unit reads the difference management information from the second logical volume and stores it in the memory.

2. The disk array apparatus according to claim 1, wherein the control unit sets a plurality of second logical volumes in accordance with the external operation, and saves the difference management information on each of the set second logical volumes when suspending the operation of the disk array apparatus.

3. The disk array apparatus according to claim 1 or claim 2, wherein the minimum storage capacity of a logical volume set as the second logical volume is specified regardless of the storage capacity of the memory.

4. The disk array apparatus according to any one of claims 1 to 3, wherein the control unit detects the storage capacity of the memory when setting the second logical volume, and presents the logical volume as a possible candidate second logical volume based on the detected storage capacity of the memory.

5. The disk array apparatus according to any one of claims 1 to 4, wherein the control unit shields the second logical volume so as to prevent it from being recognized by a host system.

6. The disk array apparatus according to any one of claims 1 to 5, wherein the difference management information includes information for managing the generation of the corresponding difference data.

7. The disk array apparatus according to any one of claims 1 to 6, wherein the difference management information includes information that associates the corresponding difference data with the difference data of its previous generation and/or its following generation.

8. A method for controlling a disk array apparatus having a function of:
retaining difference data that represent a difference between the content of a first logical volume at a designated time and the content of the current first logical volume, as well as difference management information that is management information for the difference data; and
restoring the first logical volume to the state it was in at the designated time based on the retained difference data and difference management information;
the disk array apparatus controlling method comprising:
a first step of setting, in accordance with external operation, a second logical volume for storing the difference management information in a storage area provided by a specified storage device; and
a second step of saving, on the second logical volume, the difference management information retained in a specified memory upon suspension of the operation of the disk array apparatus, while reading the difference management information from the second logical volume and storing it in the memory upon activation of the disk array apparatus.

9. The disk array apparatus controlling method according to claim 8, wherein in the first step, a plurality of second logical volumes are set in accordance with the external operation; and
in the second step, the difference management information is saved on each of the set second logical volumes when suspending the operation of the disk array apparatus.

10. The disk array apparatus controlling method according to claim 8 or claim 9, wherein the minimum storage capacity of a logical volume set as the second logical volume is specified regardless of the storage capacity of the memory.

11. The disk array apparatus controlling method according to any one of claims 8 to 10, wherein in the first step, the storage capacity of the memory is detected when setting the second logical volume, and a logical volume is presented to a user as a possible candidate second logical volume, based on the detected storage capacity of the memory.

12. The disk array apparatus controlling method according to any one of claims 8 to 11, wherein the second logical volume is shielded so as to prevent it from being recognized by a host system.

13. The disk array apparatus controlling method according to any one of claims 8 to 12, wherein the difference management information includes information for managing the generation of the corresponding difference data.

14. The disk array apparatus controlling method according to any one of claims 8 to 13, wherein the difference management information includes information that associates the corresponding difference data with the difference data of its previous generation and/or its following generation.
